# EUROPEAN PATENT SPECIFICATION

(11) **EP 3 274 759 B1**
(45) Date of publication and mention of the grant of the patent: **04.09.2019**
(21) Application number: 16726934.9
(22) Date of filing: 23.03.2016
(51) Int. Cl.: G02B 27/09, G02B 19/00

(54) **TIR LENS COMPRISING A PLURALITY OF COMPONENT LENSES AND PROVIDED WITH MEANS FOR ELIMINATING UNDESIRED LIGHT EFFECTS IN THE TRANSMITTED LUMINOUS FLUX**
TIR-LINSE MIT MEHREREN LINSENSEGMENTEN UND MIT VORRICHTUNG ZUR BESEITIGUNG UNERWÜNSCHTER LICHTEFFEKTE IM ÜBERTRAGENEN LICHTSTROM
LENTILLE À RÉFLEXION INTERNE TOTALE COMPORTANT UNE PLURALITÉ DE LENTILLES CONSTITUANTES ET ÉQUIPÉE DE MOYENS POUR ÉLIMINER DES EFFETS DE LUMIÈRE INDÉSIRABLES DANS LE FLUX LUMINEUX TRANSMIS

(30) Priority: 23.03.2015 IT FI20150084
(43) Date of publication of application: 31.01.2018
(73) Proprietor: Iguzzini Illuminazione S.p.A., 62019 Recanati (IT)
(72) Inventor: GATTARI, Massimo, 62018 Potenza Picena (IT)
(74) Representative: Savi, Massimiliano
(86) International application number: PCT/IB2016/051636
(87) International publication number: WO 2016/151502

(56) References cited:
- US-A- 4 671 606
- US-A1- 2012 075 870
- US-A1- 2014 036 510

## Description

### FIELD OF THE INVENTION

The present invention relates to the technical field of lenses, and in particular to the technical field of lenses of the TIR (Total Internal Reflection) type, and of lenses consisting of assemblies of pluralities of lenses.

### BACKGROUND ART

Lighting techniques have undergone considerable changes over the recent years also by virtue of the availability of light sources, such as LEDs, which offer flexibility of control and use which was unknown until a short while ago.

The small size of LEDs and their ability to emit ever brighter light beams which irradiate over very small, approximately punctiform surfaces, offer the possibility, with the use of appropriate lenses, screens and reflectors, to shape the emitted light beam as desired much more radically than with light sources of the filament or fluorescent type.

The constant advancements in LED construction technology for lighting technology have provided devices which will soon be able to achieve and exceed a radiation of 200 Im/Watt, such as, for example, the so-called Chip On Board (COB) LEDs or the so-called multi-die emitters. COB devices are made using a plurality of single LEDs which are encapsulated together in a single module, which appears as a small light panel extending on a given surface which is much larger in size than that occupied by a single LED. Multi-die emitters consist of a plurality of LED chips assembled on a common ceramic substrate and enclosed in a transparent silicon capsule adapted to screen the chips against environmental agents and to optimize light extraction.

Although the larger emitting surface of COBs and multi-die emitters is very beneficial in terms of emitted light quality, on the other hand there are problems related to the collimation of the emitted light beam. Indeed, the use of traditional lenses of the TIR (Total Internal Reflection) type widely used in association with single LEDs is difficult in this case, because of the need to collimate a beam emitted by a light source as extended as that of COBs or multi-die emitters. Manufacturing TIR lenses of size suited for use with extended light sources may be very difficult with common techniques such, as for example, molding, and lead to unsatisfactory results. Indeed, the lenses made by molding may be subject to non-uniform cooling, which may cause strains and irregularities inside the solidified material, which make the produced lens fragile and/or uneven. Additionally, the lenses of the TIR type made for extended light sources may be too cumbersome, thus thwarting the advantages in terms of size and contained costs that the introduction of LED technology implies.

A solution to the problems disclosed above includes manufacturing composite lenses consisting of a plurality of lenses made individually by means of the usual methods of the prior art and adapted to be used together, juxtaposed on one another.

Each lens, or lens segment, of said composite lenses is generally adapted to receive a light beam emitted by a light source and comprises an inlet surface and an outlet surface for the light beams. The various lenses or lens segments are arranged facing one another so that each lens receives a different part of the beam emitted by the light source on its inlet surface and transmits at least part of the received incident luminous flux towards its outlet surface, e.g. by reflection of the TIR (Total Internal Reflection) type.

The various adjacent lenses of the prior art often have voids between the respective facing surfaces so that the air layer present in said voids allows said facing surfaces to work as TIR type surfaces, and thus to act as a collimator of the light beams which cross them. This allows to achieve excellent light beam collimation levels and thus to maintain the dimension of the lens assembly small. For this reason, the lens assemblies of the prior art are frequently applied in all those cases in which a geometry is required so that the overall dimensions are small and the required collimation level is high. A typical example of applications of this type are those which employ lighting sources consisting of large-size LEDs, such as COBs or multi-die emitters.

However, together with many benefits, the lenses comprising composite structures as those described above have some drawbacks related to the presence of voids between the respective facing surfaces of the various lenses used.

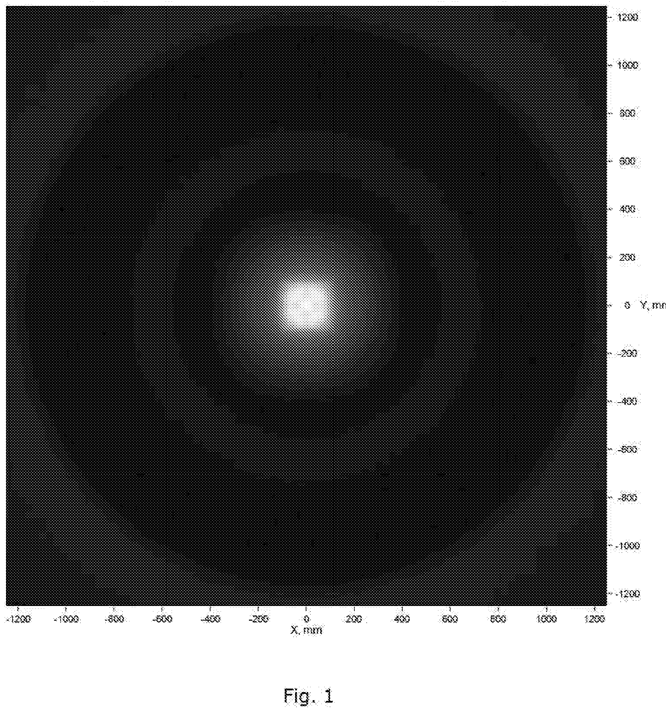

In detail, said drawbacks are such as to generate undesired effects on the illuminated surface: the generation of light rings and light traces which are different from the main light beam projected by the lighting source. Accompanying figure 1 shows the aforesaid undesired effects: an undesired pair of rings and a light halo can be seen around the main lighting zone, i.e. the central circular-shaped spot of light.

The rings of light are caused by the presence of some edges on the inner surfaces of the lenses forming the composite lens, and in general by the presence of a fraction of the beam emitted by the employed light source which is directly incident on one of said facing surfaces.

However, the aforesaid voids between the facing surfaces and the aforesaid edges belong to the composite lens design itself and cannot be eliminated. It is thus necessary to proceed so that structures of this type do not cause the described drawbacks. A TIR lens of the prior art is disclosed in document US2014/0036510.

Therefore, it is the object of the present invention to introduce a TIR lens comprising a plurality of component lens and provided with means for eliminating the undesired light effects in the projected luminous flux, described above.

Further objects, features and advantages of the present invention will become more apparent from the following detailed description provided by way of a non-limitative example and shown in the accompanying drawings, in which:

### DETAILED DESCRIPTION OF THE DRAWINGS

fig. 1 shows the undesired effects produced on the illuminated surface by the lenses of the prior art comprising composite structures;
fig. 2 shows a section of a lens of the prior art comprising a composite structure with indication of part of the luminous flux produced;
fig. 3 shows a section of a first embodiment of the composite lens according to the present invention;
fig. 4 shows a section of a second embodiment of the composite lens according to the present invention;
fig. 5 shows a section of a third embodiment of the composite lens according to the present invention;
fig. 6 shows a section of a fourth embodiment of the composite lens according to the present invention.

### DETAILED DESCRIPTION OF THE INVENTION

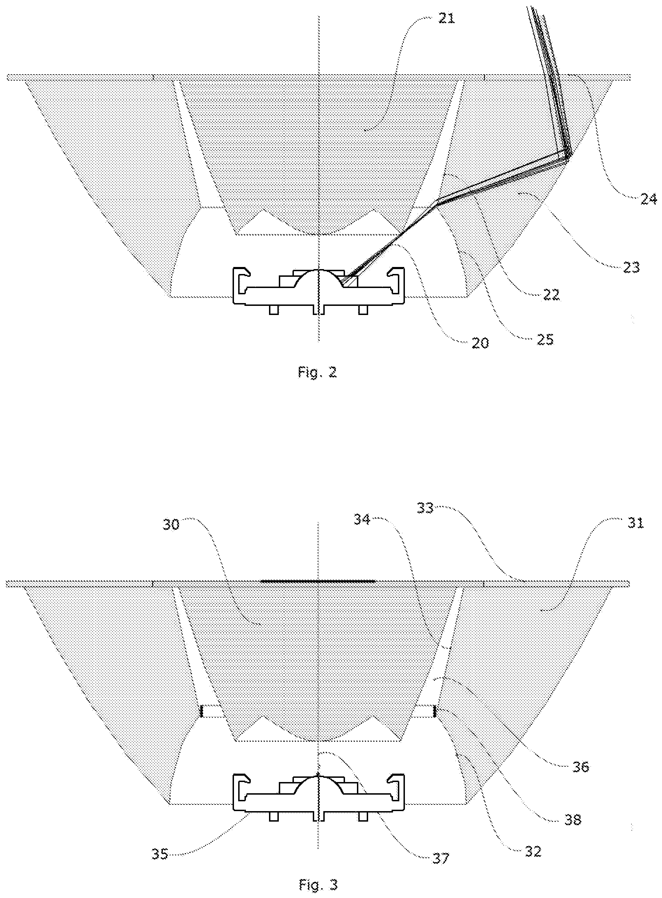

Figure 2 shows a section of an example of composite lens of the prior art with indication of part of the produced luminous flux.

As can be seen, lenses of this type may cause the refraction of part of the incident luminous flux 20 on the central lens 21, which is diverted on the side surface 22 of the side TIR lens 23 to be emitted by the outlet surface 24 of said side TIR lens 23. Therefore, this beam enters into said side lens 23 from the side surface 22 instead of from the inlet surface 25 and is thus refracted and emitted with an angle different from that required, thus producing the undesired light effects on the illuminated surface.

The present invention allows to obviate the described drawback.

With reference to figure 3, a preferred embodiment of the composite TIR lens according to the present invention comprises:
a plurality of lenses 30, 31, in which each lens comprises, in turn, an inlet surface 32 for the luminous flux, an outlet surface 33 for the luminous flux and a side surface 34, which extends between the inlet surface 32 and the outlet surface 33. Each of said lenses is arranged so as to receive at least part of the beam emitted by a light source 35 and is adapted to convey at least part of the luminous flux received through its inlet surface 32, towards its outlet surface 33.

Another part of the beam introduced in said lenses through their inlet surface 32, reaches the side surface and is totally reflected towards the outlet surface 33. Each of said lenses if further adapted to interface with the adjacent lenses through the side surface 34 thereof so that a void 36 is present between the side surfaces of two adjacent lenses, said void allowing said side surfaces to act as TIR type surfaces adapted to collimate the incident light beams.

In this preferred embodiment, said lenses 30, 31 have a rotational symmetry about their optical axis coinciding with the optical emission axis 37 of said light source 35. Said plurality of lenses preferably comprises a central lens 30 and at least one peripheral lens 31, said central lens 30 being surrounded by, and arranged inside, said at least one peripheral lens 31. Furthermore, the inlet surfaces 32 of said at least one peripheral lens 31 are concave with their curvature centered on the light source so that the incident light beam is incident in a substantially orthogonal manner on said inlet surfaces 32.

The void 36 between two side surfaces of two adjacent lenses contributes to the refraction of the light which crosses it as a function of the refraction index of air, which is lower than the refraction index of the material of which the lenses are made. This allows to dimension the side surfaces of the lens so as to produce a total internal reflection (TIR) of at least part of the incident light on said side surfaces. Said side surfaces are preferably dimensioned so as to collimate the incident light by means of total internal reflection along a direction substantially parallel to said optical axis 37. Finally, the collimated light will be emitted by the outlet surface 33 of the lens, said outlet surface 33 being preferably substantially orthogonal to said optical axis 37.

Furthermore, in this preferred embodiment, the central lens 30 comprises an inlet surface 32, comprising in turn a convex central part and a concave peripheral part adapted to collimate the incident light beam towards the outlet surface by refraction, said outlet surface 33 being preferably substantially orthogonal to said optical axis 37. Thereby, while the peripheral lenses direct the light beam emitted by the light source 35 towards their outlet surfaces by means of total internal reflection (TIR), the central lens directs the incoming light beam towards the outlet surface, especially by refraction.

Again with reference to figure 3, in order to obviate the above-described drawback of the presence of undesired light effects in the transmitted luminous flux, the composite lens according to the present invention further comprises means adapted to prevent the incidence of said luminous flux or part thereof on at least part of the side surface of at least one of said lenses 30, 31.

Said means adapted to prevent the incidence of said luminous flux or of at least part thereof on at least part of the side surface of said lenses 30, 31 may be made by painting the part of concerned side surface with an opaque paint, or by means of a strip 38 of opaque material, which is thinner than the width of the void 36 present between two adjacent lenses, removable and adapted to be arranged in said void 36, or even a strip 39 of opaque, compressible material, which has a thickness such as to fill the void 36 between two adjacent lenses, which is strip is removable and adapted to be arranged in said void 36.

The size of said strip 38 is variable according to the part of the side surface of the lenses to be concealed.

Said strip 39 may be advantageously made of compressible plastic material.

In a preferred embodiment of the present invention, the minimum extension of said strip 38 made of opaque material or of the area painted with said opaque paint is shown in figure 3 and is such as to cover the portion of the side surface 34 of said peripheral lens 31, concerned by the incidence of the light beam refracted by the edges which mark the boundary between the inlet surface 32 and the side surface 33 of said central lens 30.

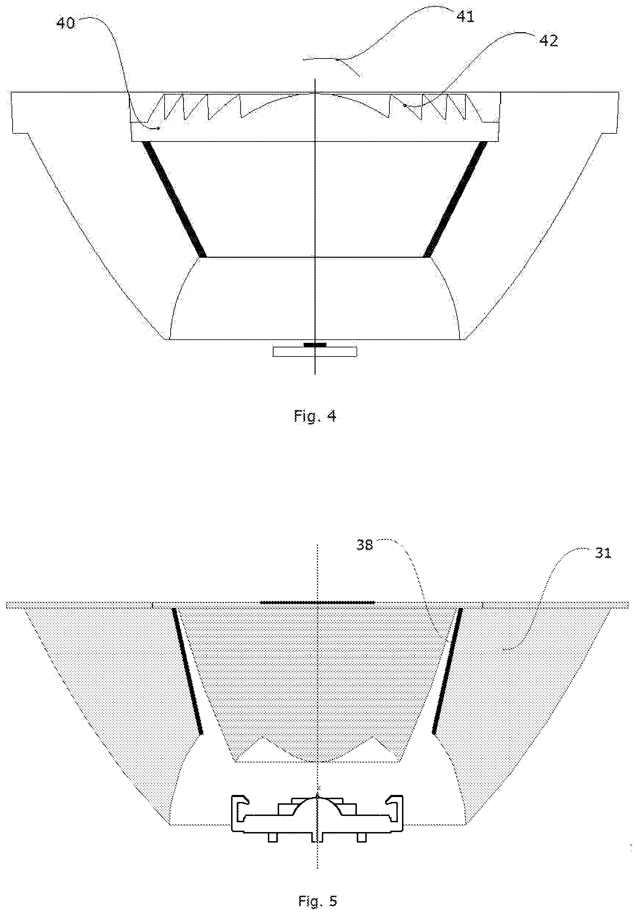

In another preferred embodiment of the present invention, said strip made of opaque material or said area painted with opaque paint extends so as to cover the side surface 34 of said peripheral lens 31 entirely, as shown in figures 4 and 5.

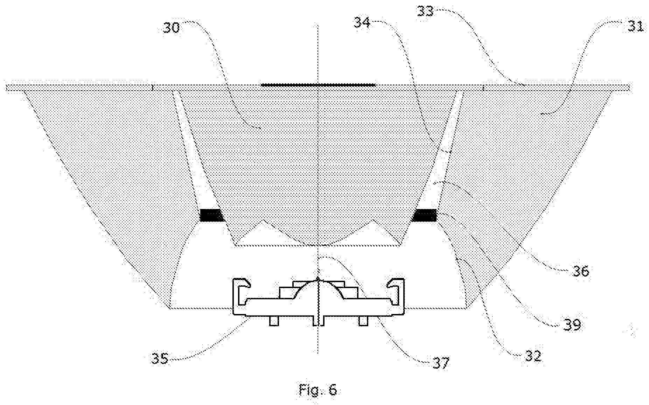

In a further preferred embodiment of the present invention, shown in figure 6, the thickness of said strip 39 of opaque and compressible material is such as to fill the void 36 present between two adjacent lenses so as to screen the fraction of luminous flux which would be incident on the side surface 34 of said peripheral lens 31. The compressible material allows said strip 39 to be inserted easily into said void 36 present between two adjacent lenses and allows the subsequent expansion of the compressible material to be utilized to completely screen the inlet of said space 36 for each incident light beam.

Said strip of opaque material or said area painted with opaque paint is not such as to optically couple the two facing lenses, leaving a void therebetween. This allows to maintain the TIR features of the two facing surfaces. The strip of opaque material or said area painted with opaque paint according to the present invention is such as to eliminate the rays of the light beam which abnormally interact with the aforesaid surfaces, leaving unchanged the behavior of the rays of the light beam which do not cause undesired refractions.

Figure 4 mentioned above shows another preferred embodiment of the composite lens according to the present invention. This preferred embodiment comprises a central lens 40 having a small body and an outlet surface 41 comprising a plurality of faces 42 inclined so as to promote the refraction of the light beam which crosses said central lens 40 in a direction substantially parallel to the rotational symmetry axis of said central lens 40.

Said central lens 40 may be advantageously made by using a Fresnel lens.

The composite lens according to the present invention may be made of all the plastic material used in the prior art for this purpose, such as, for example, polymethyl methacrylate (PMMA), poly-methyl-methacrylimide (PMMI) and others. Said strip 54 of opaque material may instead by advantageously made of any opaque material, e.g. of opaque plastics.

The use of such means adapted to prevent the incidence of said luminous flux or of part thereof on at least part of the side surface of at least one of said lenses 30, 31, will thus screen said lenses against the portion of luminous flux which is refracted and directed towards said lenses in an undesired manner, thus producing lack of uniformity and unevenness of the projected luminous flux which could be visible and inconvenient on the illuminated surfaces.

## Claims

1. A composite lens comprising a plurality of lenses (30, 31) comprising an inlet surface (25, 32) for the luminous flux, an outlet surface (33) for the luminous flux and a side surface (34) which extends between said inlet (32) and outlet (33) surfaces, each lens of said plurality of lenses being arranged so as to receive at least part of the beam emitted by a light source (35) associated with said plurality of lenses (30, 31) and being adapted to conduct towards said outlet surface (33) at least part of the received luminous flux through said inlet surface (32), **characterized in that** it comprises means adapted to prevent the incidence of said luminous flux or part thereof on at least part of the side surface of at least one lens of said plurality of lenses (30, 31), chosen from the group comprising a strip (38, 39) of opaque material, and adapted to be removably arranged in the void (36) present between two adjacent lenses of said plurality of lenses and an opaque paint applied onto at least part of said side surface (34).

2. A lens according to the preceding claim, **characterized in that** said plurality of lenses (30, 31) comprises a central lens (21, 30, 40) and at least one peripheral lens (23, 31) having a rotational symmetry about their optical axis coinciding with the optical emission axis (37) of said light source (35).

3. A lens according to one or more of the preceding claims, **characterized in that** said central lens (21, 30, 40) is surrounded by, and arranged inside, said at least one peripheral lens (23, 31).

4. A lens according to the preceding claim, **characterized in that** said central lens (40) has a small body and an outlet surface (41) comprising a plurality of faces (42) inclined so as to promote the refraction of the light beam which crosses said central lens (40) in a direction substantially parallel to the rotational symmetry axis of said central lens (40).

5. A lens according to one or more of the claims from 2 to 4, **characterized in that** the inlet surfaces (32) of said at least one peripheral lens (23, 31) are concave with curvature centered on the light source so that the incident light beam is incident in a substantially orthogonal manner on said inlet surfaces (32).

6. A lens according to one or more of the claims from 2 to 5, **characterized in that** the side surfaces of said at least one peripheral lens (23, 31) are such to collimate the incident light by means of total internal reflection along a direction substantially parallel to said optical axis (37).

7. A lens according to one or more of the claims from 1 to 6, **characterized in that** said strip (38) of opaque material, is thinner than the width of the void (36) present between two adjacent lenses.

8. A lens according to one or more of the claims from 1 to 6, **characterized in that** said strip (39) of opaque material is compressible and has a thickness so that it fills the void (36) present between two adjacent lenses.

9. A lens according to one or more of the claims from 1 to 8, **characterized in that** the extension of said strip (38, 39) made of opaque material or the extension of the area painted with said opaque paint is such to cover the side portion (34) of said peripheral lens (31), concerned by the incidence of the light beam refracted by the edges which mark the boundary between the inlet surface (32) and the side surface (33) of said central lens (30).

10. A lens according to one or more of the claims from 1 to 8, **characterized in that** the extension of said strip (38, 39) made of opaque material or the extension of the area painted with said opaque paint is such to cover the side surface (34) of said peripheral lens (31) entirely.

11. A lighting apparatus comprising at least one LED lighting source **characterized in that** it comprises at least one lens according to one or more of the preceding claims.

12. A lighting apparatus according to the preceding claim, **characterized in that** said at least one LED lighting source is chosen from the group comprising LED devices of the chip-on-board type and LED devices of the multi-die-emitter type.

## Patentansprüche

1. Verbundlinse mit einer Vielzahl von Linsen (30, 31), die eine Einlassoberfläche (25, 32) für den Lichtstrom, eine Auslassoberfläche (33) für den Lichtstrom und eine sich zwischen der Einlassfläche (32) und der Auslassfläche (33) erstreckende Seitenfläche (34) aufweisen, wobei jede Linse der Vielzahl von Linsen so angeordnet ist, dass sie zumindest einen Teil des Strahls erhält, der von der Lichtquelle (35) emittiert wird, die mit der Vielzahl von Linsen (30, 31) verbunden ist, und geeignet ist, zumindest einen Teil des durch die Einlassoberfläche (32) erhaltenen Lichtstroms zur Auslassoberfläche (33) zu leiten,
**dadurch gekennzeichnet, dass**
sie Mittel aufweist, die geeignet sind zu verhindern, dass der Lichtstrom oder Teile davon in zumindest einen Teil der Seitenfläche einer Linse der Vielzahl von Linsen (30, 31) einfällt, ausgewählt aus der Gruppe aufweisend einen Streifen (38, 39) von lichtundurchlässigem Material, der geeignet ist, um in der Lücke (36) zwischen zwei benachbarten Linsen der Vielzahl von Linsen entfernbar angeordnet zu werden, und einer lichtundurchlässigen Farbe, die zumindest auf einem Teil der Seitenfläche (34) aufgetragen ist.

2. Linse gemäß dem vorigen Anspruch, **dadurch gekennzeichnet, dass** die Vielzahl von Linsen (30, 31) eine zentrale Linse (21, 30, 40) und zumindest eine periphere Linse (23, 31) aufweist, die um ihre optischen Achsen rotationssymmetrisch sind, welche mit der optischen Emissionsachse (37) der Lichtquelle (35) übereinstimmt.

3. Linse gemäß einem oder mehreren der vorigen Ansprüche, **dadurch gekennzeichnet, dass** die zentrale Linse (21, 30, 40) von der zumindest einen peripheren Linse (23, 31) umgeben und in dieser angeordnet ist.

4. Linse gemäß dem vorigen Anspruch, **dadurch gekennzeichnet, dass** die zentrale Linse (40) einen kleinen Korpus und eine Ausgangsoberfläche (41) aufweist, die eine Vielzahl von Seiten (42) aufweist, die so geneigt sind, dass die Refraktion des Lichtstrahls, der die zentrale Linse (40) durchquert, in einer Richtung im Wesentlichen parallel zur Rotationssymmetrieachse der zentralen Linse (40) unterstützt wird.

5. Linse gemäß einem oder mehreren der Ansprüche 2 bis 4, **dadurch gekennzeichnet, dass** die Einlassoberflächen (32) der zumindest einen peripheren Linse (23, 31) konkav sind, mit einer Krümmung, die auf der Lichtquelle zentriert ist, so dass der einfallende Lichtstrahl im Wesentlichen senkrecht auf die Einlassflächen (32) trifft.

6. Linse gemäß einem oder mehreren der Ansprüche 2 bis 5, **dadurch gekennzeichnet, dass** die Seitenflächen der zumindest einen peripheren Linse (23, 31) das einfallende Licht mittels völliger interner Reflexion entlang einer im Wesentlichen zur optischen Achse (37) parallelen Richtung kollimieren.

7. Linse gemäß einem oder mehreren der Ansprüche 1 bis 6, **dadurch gekennzeichnet, dass** der Streifen (38) aus lichtundurchlässigem Material dünner ist als die Breite der Lücke (36) zwischen zwei benachbarten Linsen.

8. Linse gemäß einem oder mehreren der Ansprüche 1 bis 6, **dadurch gekennzeichnet, dass** der Streifen (39) aus lichtundurchlässigem Material zusammendrückbar ist und eine Dicke aufweist, dass er die Lücke (36) zwischen zwei benachbarten Linsen ausfüllt.

9. Linse gemäß einem oder mehreren der Ansprüche 1 bis 8, **dadurch gekennzeichnet, dass** die Ausdehnung des Streifens (38, 39) aus lichtundurchlässigem Material oder die Ausdehnung des mit lichtundurchlässiger Farbe bemalten Bereichs derart ist, dass der Seitenbereich (34) der peripheren Linse (31) abgedeckt ist, der von dem Einfall des Lichtstrahls betroffen ist, der von den Kanten, die die Grenze zwischen der Einlassoberfläche (32) und der Seitenoberfläche (33) der zentralen Linse (30) markieren, gebrochen wird.

10. Linse gemäß einem oder mehreren der Ansprüche 1 bis 8, **dadurch gekennzeichnet, dass** die Ausdehnung des Streifens (38, 39) aus lichtundurchlässigem Material oder die Ausdehnung des mit lichtundurchlässiger Farbe bemalten Bereichs derart ist, dass die Seitenoberfläche (34) der peripheren Linse (31) vollständig abgedeckt ist.

11. Beleuchtungsvorrichtung mit zumindest einer LED-Lichtquelle, **dadurch gekennzeichnet, dass** sie zumindest eine Linse gemäß einem oder mehreren der vorigen Ansprüche aufweist.

12. Beleuchtungsvorrichtung gemäß dem vorigen Anspruch, **dadurch gekennzeichnet, dass** die zumindest eine LED-Lichtquelle ausgewählt ist aus der Gruppe aufweisend LED-Geräte der Bauarten Chip-on-Board und Multi-Die-Emitter.

## Revendications

1. Lentille composite comprenant une pluralité de lentilles (30, 31) comprenant une surface d'entrée (25, 32) pour le flux lumineux, une surface de sortie (33) pour le flux lumineux et une surface latérale (34) qui s'étend entre lesdites surfaces d'entrée (32) et de sortie (33), chaque lentille de ladite pluralité de lentilles étant agencée de manière à recevoir au moins une partie du faisceau émis par une source lumineuse (35) associée à ladite pluralité de lentilles (30, 31) et étant apte à conduire, vers ladite surface de sortie (33), au moins une partie du flux lumineux reçu à travers ladite surface d'entrée (32), **caractérisée en ce qu'**elle comprend des moyens aptes à empêcher l'incidence dudit flux lumineux ou d'une partie de celui-ci sur au moins une partie de la surface latérale d'au moins une lentille de ladite pluralité de lentilles (30, 31), choisis dans le groupe se composant d'une bande (38, 39) de matériau opaque, et apte à être agencée, de manière amovible, dans le vide (36) présent entre deux lentilles adjacentes de ladite pluralité de lentilles, et d'une peinture opaque appliquée sur au moins une partie de ladite surface latérale (34).

2. Lentille selon la revendication précédente, **caractérisée en ce que** ladite pluralité de lentilles (30, 31) comprend une lentille centrale (21, 30, 40) et au moins une lentille périphérique (23, 31) ayant une symétrie rotationnelle autour de leur axe optique coïncidant avec l'axe d'émission optique (37) de ladite source lumineuse (35).

3. Lentille selon une ou plusieurs des revendications précédentes, **caractérisée en ce que** ladite lentille centrale (21, 30, 40) est entourée par ladite au moins une lentille périphérique (23, 31) et agencée à l'intérieur de celle-ci.

4. Lentille selon la revendication précédente, **caractérisée en ce que** ladite lentille centrale (40) a un petit corps et une surface de sortie (41) comprenant une pluralité de faces (42) inclinées de manière à promouvoir la réfraction du faisceau lumineux qui traverse ladite lentille centrale (40) dans un sens sensiblement parallèle à l'axe de symétrie rotationnelle de ladite lentille centrale (40).

5. Lentille selon une ou plusieurs des revendications 2 à 4, **caractérisée en ce que** les surfaces d'entrée (32) de ladite au moins une lentille périphérique (23, 31) sont concaves avec une courbure centrée sur la source lumineuse de sorte que le faisceau lumineux incident soit incident d'une manière sensiblement orthogonale sur lesdites surfaces d'entrée (32) .

6. Lentille selon une ou plusieurs des revendications 2 à 5, **caractérisée en ce que** les surfaces latérales de ladite au moins une lentille périphérique (23, 31) sont aptes à collimater la lumière incidente au moyen d'une réflexion interne totale dans un sens sensiblement parallèle audit axe optique (37).

7. Lentille selon une ou plusieurs des revendications 1 à 6, **caractérisée en ce que** ladite bande (38) de matériau opaque est plus mince que la largeur du vide (36) présent entre deux lentilles adjacentes.

8. Lentille selon une ou plusieurs des revendications 1 à 6, **caractérisée en ce que** ladite bande (39) de matériau opaque est compressible et a une épaisseur telle qu'elle remplit le vide (36) présent entre deux lentilles adjacentes.

9. Lentille selon une ou plusieurs des revendications 1 à 8, **caractérisée en ce que** l'extension de ladite bande (38, 39) constituée de matériau opaque ou l'extension de la zone peinte avec ladite peinture opaque est apte à recouvrir la portion latérale (34) de ladite lentille périphérique (31), concernée par l'incidence du faisceau lumineux réfracté par les bords qui marquent la frontière entre la surface d'entrée (32) et la surface latérale (33) de ladite lentille centrale (30).

10. Lentille selon une ou plusieurs des revendications 1 à 8, **caractérisée en ce que** l'extension de ladite bande (38, 39) constituée de matériau opaque ou l'extension de la zone peinte avec ladite peinture opaque est apte à recouvrir entièrement la surface latérale (34) de ladite lentille périphérique (31).

11. Appareil d'éclairage comprenant au moins une source d'éclairage à DEL, **caractérisé en ce qu'**il comprend au moins une lentille selon une ou plusieurs des revendications précédentes.

12. Appareil d'éclairage selon la revendication précédente, **caractérisé en ce que** ladite au moins une source d'éclairage à DEL est choisie dans le groupe comprenant des dispositifs à DEL du type à puce sur carte et des dispositifs à DEL du type à émetteurs à matrices multiples.
